# EUROPEAN PATENT APPLICATION

(11) **EP 4 787 149 A1**
(43) Date of publication of application: **05.08.2026**
(21) Application number: 25223070.1
(22) Date of filing: 12.12.2025
(51) Int. Cl.: G06F 8/34, G06F 8/38, G06F 9/451, G06N 3/0464, G06N 3/08, G06V 10/82

(54) **AUTOMATIC GENERATION OF AN EDITABLE USER INTERFACE SCREEN FROM APPLICATION SCREEN IMAGE**

(30) Priority: 31.01.2025 IN 202521008401
(71) Applicant: Tata Consultancy Services Limited, Maharashtra (IN)
(72) Inventor: RAMESH, Rajini, 600119 Chennai, Tamil Nadu (IN); SRIKANTH, Allam, 500034 Hyderabad, Telangana (IN); DESIK, Anantha, 500034 Hyderabad, Telangana (IN); CHANDRAGIRI, Sandeep, 500034 Hyderabad, Telangana (IN)
(74) Representative: Goddar, Heinz J.

(57) **Abstract**

The disclosure relates generally to methods and systems for automatic generation of an editable user interface (UI) screen from application screen image. Conventional techniques for automatic generation of the editable user interface screen from application screen image are limited to specific UI page type and challenges with the conversion accuracy. The methods and systems of the present disclosure predict the bounding boxes of different graphical components and their labels present in the given UI image screen using a trained object detection model. Then, the one or more group boxes and the one or more nested group boxes are identified based on their properties and next one or more UI widgets present in both the one or more group boxes and the one or more nested group boxes are identified. Lastly the editable UI screen image is automatically generated from the identified UI widgets.

## Description

### CROSS-REFERENCE TO RELATED APPLICATIONS AND PRIORITY

The present application claims priority from Indian application no. 202521008401, filed on January 31, 2025.

### TECHNICAL FIELD

The disclosure herein generally relates to application user interface (UI) development, and, more particularly, to methods and systems for automatic generation of an editable user interface screen from application screen image.

### BACKGROUND

Graphical user interfaces (GUIs) and user interfaces (UIs) for a software application are very essential, which enable users to navigate throughout the application and allow the users to effectively interact with the application. The GUIs and UIs are typically developed with different several graphical components including (i) input control components such as buttons, list boxes, check boxes, text fields, radio buttons and so on, (ii) navigational components such as sliders, links, tabs, menu buttons, and so on, (iii) informational components such as progress bar, message boxes, notifications, and so on, and (iv) other graphical components such as containers. The GUIs and UIs are designed to be simple, flexible, consistent, and yet scalable to further application upgrades.

Conventional UI development involves a design of UI screens followed by development and testing. In the case of new application development or in modernization of legacy applications, the UI design plays a key role in the usability of the application. The UI design normally takes a few days to weeks to design the user interface and another few days to weeks to develop the code using UI widget. The two activities of the development and the testing are usually done by two different teams. Some of the conventional techniques transform wireframes to as-is screens with responsive behavior.

However, cropping and labelling of UI widgets is a time-consuming process as it had to be done by user manually for every image. Further, cropping and labelling of UI widgets is challenging as a template used to determine the UI widgets had fixed dimensions, and sometimes due to excess contours detection. Further, some of the conventional techniques converts the UI screen image to code using artificial intelligence (AI), however these techniques are limited to specific UI page type (for example, hyper-text markup language (HTML) pages) and challenges with the conversion accuracy.

### SUMMARY

Embodiments of the present disclosure present technological improvements as solutions to one or more of the above-mentioned technical problems recognized by the inventors in conventional systems.

In an aspect, a processor-implemented method for automatic generation of an editable user interface screen from application screen image is provided. The method comprising: receiving an input image of an input user interface (UI) application screen for which an editable UI screen is to be generated; predicting one or more bounding boxes and a bounding box class associated with each of the one or more bounding boxes, from the input image of the input UI application screen, using a trained object detection model; identifying one or more group boxes from the one or more bounding boxes, based on the bounding box class associated with each of the one or more bounding boxes; identifying one or more UI widgets in each group box of the one or more group boxes, using (i) the input image of the input UI application screen, (ii) the one or more bounding boxes and the bounding box class associated with each of the one or more bounding boxes; identifying one or more nested group boxes present in each group box of the one or more group boxes based on presence of one or more expanding line widgets and one or more collapse line widgets in each group box; identifying the one or more UI widgets by iteratively processing the one or more expanding line widgets and the one or more collapse line widgets associated with each nested group box of the one or more nested group boxes present in each group box; and automatically generating the editable UI screen for the input UI application screen, from one or more of (i) the one or more UI widgets in each group box of the one or more group boxes, and (ii) the one or more UI widgets associated with each nested group box of the one or more nested group boxes present in each group box, using a forward engineering approach.

In another aspect, a system for automatic generation of an editable user interface screen from application screen image is provided. The system includes: a memory storing instructions; one or more Input/Output (I/O) interfaces; and one or more hardware processors coupled to the memory via the one or more I/O interfaces, wherein the one or more hardware processors are configured by the instructions to: receive an input image of an input user interface (UI) application screen for which an editable UI screen is to be generated; predict one or more bounding boxes and a bounding box class associated with each of the one or more bounding boxes, from the input image of the input UI application screen, using a trained object detection model; identify one or more group boxes from the one or more bounding boxes, based on the bounding box class associated with each of the one or more bounding boxes; identify one or more UI widgets in each group box of the one or more group boxes, using (i) the input image of the input UI application screen, (ii) the one or more bounding boxes and the bounding box class associated with each of the one or more bounding boxes; identify one or more nested group boxes present in each group box of the one or more group boxes based on presence of one or more expanding line widgets and one or more collapse line widgets in each group box; identify the one or more UI widgets by iteratively processing the one or more expanding line widgets and the one or more collapse line widgets associated with each nested group box of the one or more nested group boxes present in each group box; and automatically generate the editable UI screen for the input UI application screen, from one or more of (i) the one or more UI widgets in each group box of the one or more group boxes, and (ii) the one or more UI widgets associated with each nested group box of the one or more nested group boxes present in each group box, using a forward engineering approach.

In yet another aspect, there are provided one or more non-transitory machine-readable information storage mediums comprising one or more instructions which when executed by one or more hardware processors cause: receiving an input image of an input user interface (UI) application screen for which an editable UI screen is to be generated; predicting one or more bounding boxes and a bounding box class associated with each of the one or more bounding boxes, from the input image of the input UI application screen, using a trained object detection model; identifying one or more group boxes from the one or more bounding boxes, based on the bounding box class associated with each of the one or more bounding boxes; identifying one or more UI widgets in each group box of the one or more group boxes, using (i) the input image of the input UI application screen, (ii) the one or more bounding boxes and the bounding box class associated with each of the one or more bounding boxes; identifying one or more nested group boxes present in each group box of the one or more group boxes based on presence of one or more expanding line widgets and one or more collapse line widgets in each group box; identifying the one or more UI widgets by iteratively processing the one or more expanding line widgets and the one or more collapse line widgets associated with each nested group box of the one or more nested group boxes present in each group box; and automatically generating the editable UI screen for the input UI application screen, from one or more of (i) the one or more UI widgets in each group box of the one or more group boxes, and (ii) the one or more UI widgets associated with each nested group box of the one or more nested group boxes present in each group box, using a forward engineering approach.

In an embodiment, the trained object detection model is obtained by: receiving (i) one or more UI widgets associated with each web screen image of a plurality of web screen images, and (ii) a plurality of UI widget labels; annotating the one or more UI widgets associated with each web screen image of the plurality of web screen images with the plurality of UI widget labels, using a widget labeling technique, to obtain one or more annotated UI widgets associated with each web screen image of the plurality of web screen images; and training a neural network model with (i) the plurality of web screen images and (ii) the one or more annotated UI widgets associated with each web screen image, to obtain the trained object detection model.

In an embodiment, the one or more UI widgets identified in each group box and the one or more UI widgets identified in each nested group box include one or more general UI widgets and one or more custom UI widgets.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system for automatic generation of an editable user interface screen from application screen image, in accordance with some embodiments of the present disclosure.
FIGS. 2A and 2B illustrate exemplary flow diagrams of a processor-implemented method for automatic generation of an editable user interface screen from application screen image, using the system of FIG. 1, in accordance with some embodiments of the present disclosure.
FIG. 3 is a flowchart showing the steps for obtaining a trained object detection model, in accordance with some embodiments of the present disclosure.
FIGS. 4A and 4B show an exemplary input user interface (UI) application screen image and a respective generated editable UI screen, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present disclosure solves the technical problems in the art with the methods and systems for automatic generation of an editable user interface screen from application screen image. The methods and systems of the present disclosure detect the user interface (UI) widgets present in the given UI screen image using deep learning technique and automatically generates an editable UI screen for the given UI screen image using the detected UI widgets.

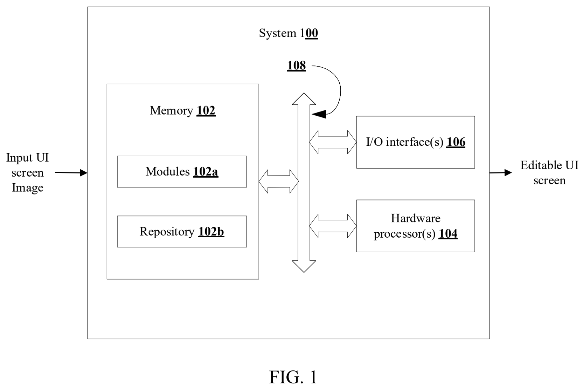

Referring now to the drawings, and more particularly to FIG. 1 through FIG. 4B, where similar reference characters denote corresponding features consistently throughout the figures, there are shown preferred embodiments, and these embodiments are described in the context of the following exemplary systems and/or methods.

FIG. 1 is an exemplary block diagram of a system 100 for automatic generation of an editable user interface screen from application screen image, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

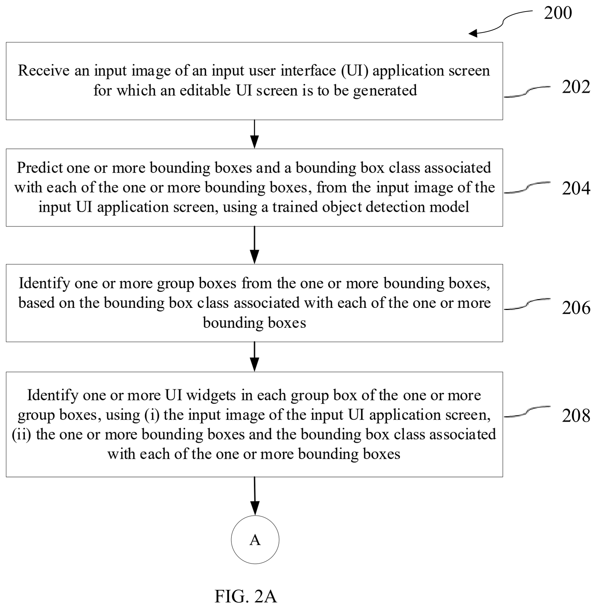

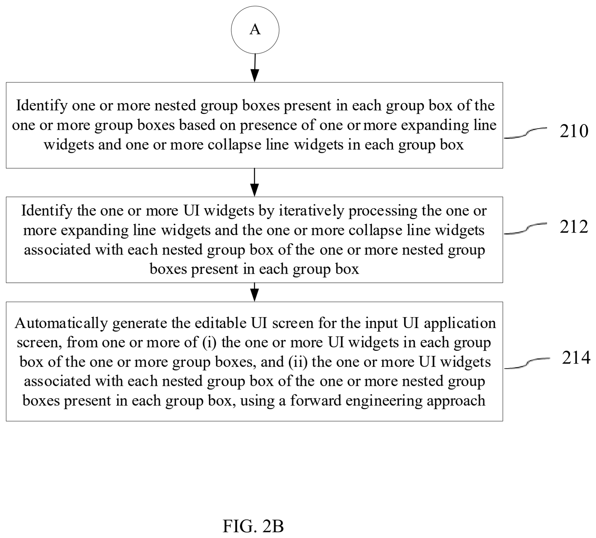

Referring to FIGS. 2A and 2B, components and functionalities of the system 100 are described in accordance with an example embodiment of the present disclosure. For example, FIGS. 2A and 2B illustrate exemplary flow diagrams of a processor-implemented method 200 for automatic generation of an editable user interface screen from application screen image, using the system 100 of FIG. 1, in accordance with some embodiments of the present disclosure. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the one or more input/output (I/O) interfaces 106 of the system 100 are configured to receive an input image of an input user interface (UI) application screen for which an editable UI screen is to be generated.

At step 204 of the method 200, the one or more hardware processors 104 of the system 100 are configured to predict one or more bounding boxes and a bounding box class associated with each of the one or more bounding boxes, from the input image of the input UI application screen received at step 202 of the method 200. The one or more bounding boxes are the object areas or the prediction boxes of different UI graphical components (UI widgets) present in the input image. In an embodiment, each of the one or more bounding boxes is pertaining to an object location in the given input image and is identified with object coordinates (*xₘᵢₙ, xₘₐₓ, yₘᵢₙ, yₘₐₓ*). Further, the bounding box class associated with each of the one or more bounding boxes is a UI widget class or UI widget label of the plurality of UI widgets such as textbox, radio button, list box, and so on, and is identified with a widget class identification number (ID).

A trained object detection model is employed to predict the one or more bounding boxes and the bounding box class associated with each of the one or more bounding boxes that are present in the input image of the input UI application screen.

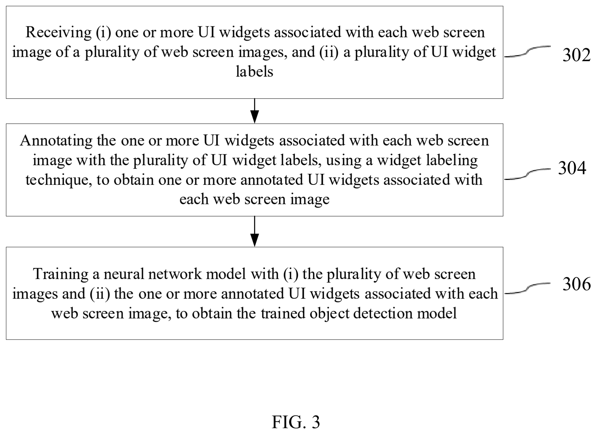

FIG. 3 is a flowchart showing the steps for obtaining a trained object detection model, in accordance with some embodiments of the present disclosure. As shown in FIG. 3, obtaining the trained object detection model is explained through steps 302 to 306.

At step 302, a plurality of UI widgets, and a plurality of UI widget labels are received. The plurality of UI widgets are the different graphical components that are retrieved from a plurality of web screen images. Each web screen image of the plurality of web screen images may include one or more UI widgets and thus the plurality of UI widgets is retrieved from the plurality of web screen images. The plurality of UI widget labels are the UI widget types that are available in the art but are not limited to buttons, list boxes, check boxes, text fields, radio buttons, progress bar, message boxes, notifications, and containers.

At step 304, the one or more UI widgets associated with each web screen image received at step 302 are annotated with the plurality of UI widget labels, to obtain one or more annotated UI widgets associated with each web screen image. The one or more UI widgets present in each web screen image are annotated with respective UI widget labels to obtain the one or more annotated UI widgets for the given web screen image. In an embodiment, a widget labeling technique such as LabelImg is employed for the annotation process.

At step 306, a neural network model is trained with the plurality of web screen images and the one or more annotated UI widgets associated with each web screen image obtained at steps 302 and 304, to obtain the trained object detection model. In an embodiment, the neural network model is one of a deep neural network models such as faster R-convolutional neural network (CNN) model and Detectron2 model.

The neural network model is trained with each web screen image at a time of the plurality of web screen images. Each web screen image is passed to an input layer of the neural network model to obtain one or more predicted bounding boxes and their corresponding predicted bounding box labels (or classes) through an output layer of the neural network model. Then the one or more predicted bounding boxes and their corresponding predicted bounding box labels are compared against the one or more actual annotated UI widgets (UI widgets and corresponding UI widget labels). Next, network weights of the neural network model are back propagated and updated accordingly based on the comparison loss and the training process is continued with all the web screen images to obtain the trained object detection model.

In an embodiment, training process of the neural network model is as follows:
(a) Configuring a plurality of dependencies (Py Torch, Torch vision) of the Faster R-CNN model, and setting up an environment with corresponding versions of the plurality of dependencies.
(b) Registering the custom UI widget dataset for training and evaluating the Faster R-CNN model using a register_COCO_instances function. (These lines are crucial for integrating thecustom datasets with the Faster R-CNN model. The register_coco_instances function allows the Faster R-CNN model to understand the structure of the datasets, including the locations of image files and corresponding annotations).
(c) Configuring the Faster R-CNN model by creating a configuration object (cfg) using get_cfg (), and configuring a plurality of training parameters, such as the number of data loader workers, model weights, number of images per batch, and the base learning rate. Then a custom training configuration is constructed. For this, at first, a configuration object (cfg) is created using get_cfg (). Then the settings are merged from a pre-trained Faster R-CNN model configuration file. Further, the training and validation datasets are specified using the names registered earlier with register_COCO _instances.)
(d) Configuring the Faster R-CNN model with warm-up iterations, maximum training iterations, learning rate schedule steps, and the gamma value and sets parameters related to the region of interest (ROI) heads, specifying the batch size per image and the number of classes in the dataset.
(e) Lastly, training the Faster R-CNN model is performed after setting the config values of various parameters, once after the training is completed, a weight (.pth) file is generated.

Using the generated weight file, the trained object detection model is utilized in real-time for predicting the one or more bounding boxes and the bounding box class (label) associated with each of the one or more bounding boxes, from the given input image of the input UI application screen.

Referring back to the method 200, at step 206 of the method 200, the one or more hardware processors 104 of the system 100 are configured to identify one or more group boxes from the one or more bounding boxes, based on the corresponding bounding box class predicted at step 204 of the method 200. The one or more group boxes refer to the graphical component that contains one or more graphical components present inside of it, where the one or more graphical components may be of same of different graphical component types. A group box may include one or more of the same types of graphical components, for example, the group box with 2-3 radio buttons, or the group box with 3-4 text boxes, or the group box with 5-6 list boxes, and so on. Further, the group box may include one or more different types of the graphical components, for example, the group box with 1 radio button, 2 text boxes, 3 list boxes, or the group box with 2 radio buttons, 3 check boxes, and so on.

Thus, the one or more group boxes that are present in each of the one or more bounding boxes obtained at step 204 are identified based on corresponding bounding box class of type 'group box'. If no group boxes are identified in hypothetical cases, then a new group box is created with the one or more bounding boxes predicted at step 204 of the method 200.

At step 208 of the method 200, the one or more hardware processors 104 of the system 100 are configured to identify one or more UI widgets present in each group box of the one or more group boxes identified at step 206 of the method 200. Identify one or more UI widgets present in each group box done based on the one or more bounding boxes and the corresponding bounding box classes present in the input image of the input UI application screen. More specifically, the one or more UI widgets present in each group box are identified if the bounding box is identified as the group box and contains the bounding box classes of one of the graphical components. The one or more UI widgets identified in each group box include one or more general UI widgets that are widely available and one or more custom UI widgets that may be created by the user for specific purposes.

At step 210 of the method 200, the one or more hardware processors 104 of the system 100 are configured to identify one or more nested group boxes present in each group box of the one or more group boxes. The nested group boxes are the group boxes present within another group box. These group boxes may also have UI widgets and thus these nested group boxes are to be identified in order not to miss any UI widgets that are part of the input UI application screen. The nested group boxes normally have one of one or more one or more expanding line widgets and one or more collapse line widgets. Thus, the one or more nested group boxes are identified based on presence of one or more expanding line widgets and one or more collapse line widgets in each group box.

At step 212 of the method 200, the one or more hardware processors 104 of the system 100 are configured to identify the one or more UI widgets present in each nested group box of the one or more nested group boxes present in each group box that are identified at step 210 of the method 200.Identifying the one or more UI widgets present in each nested group box is carried out by iteratively processing the one or more expanding line widgets and the one or more collapse line widgets of the corresponding nested group box. The one or more UI widgets identified in each nested group box include one or more general UI widgets that are widely available and one or more custom UI widgets that may be created by the user for specific purposes.

In the context of the present disclosure, the one or more custom UI widgets present in each group box and each nested group box are the user defined custom (UDC) widgets. The naming convention of these custom UI widgets starts with UDC_WidgetName. Further, JSON properties of the custom UI widgets are different compared to standard UI widgets. The JSON properties of UI widget label and UI widget type are not presented for the custom UI widgets, instead they contain the properties of the objectID. Thus, while identifying the one or more custom UI widgets, naming convention of these widgets are compared with the standard widgets.

For example, the JSON creation of one of the UDC widget - UDC_ TypeAheadSearchLevel1 is as follows: {

```
    "UDCWidget": {
     "objectId": "TypeAheadSearchLevel1",
     "parentWidgetId": "",
     "conf": {
      "index": "0"
     }
    }
   }
   Whereas for any standard widgets the JSON creation is:
   {
       "DateWidget": {
         "Label": "Opened on",
         "widgetType": {
          "name": "DateWidget"
         },
         "parentWidgetId": "",
         "conf": {
          "index": "1"
         }
        }
      }
```

For panel widgets such as group boxes where it contains the multiple standard widgets inside the group box as parent-child relationship, the JSON structure is as follows:

```
 "GroupBox0": {
     "Label": "",
     "widgetType": {
      "name": "GroupBoxWidget"
     },
     "parentWidgetId": "",
     "conf": {
      "index": "0"
     },
     "Children": [
       {
       "TextboxWidget": {
         "Label": "First Name",
         "widgetType": {
          "name": "TextboxWidget"
         },
         "parentWidgetId": "",
         "conf": {
          "index": "0"
         }
        }
      }
```

For complex UI widgets such as grid widgets, the create_json () calls find_columns_names() modules which returns the column names and number of columns in the grid widget, if such grid widgets are present in the input UI application screen. If a radio button widget is present in the input UI application screen, then the options associated with each radio button are identified. If the user selects and uploads a VisualBasic screen (VB Screen) as the input image of an input user interface (UI) application screen, the labels and widgets need to be separated for the VB images.

Finally, at step 214 of the method 200, the one or more hardware processors 104 of the system 100 are configured to automatically generate the editable UI screen for the input UI application screen from one or more of (i) the one or more UI widgets in each group box of the one or more group boxes identified at step 208 of the method 200, and (ii) the one or more UI widgets associated with each nested group box of the one or more nested group boxes present in each group box identified at step 212 of the method 200. If the UI widgets are not identified at step 212 of the method 200, then the editable UI screen for the input UI application screen is generated only from the one or more UI widgets in each group box of the one or more group boxes identified at step 208 of the method 200.

A forward engineering approach is employed to automatically generate the editable UI screen for the input UI application screen from the identified UI widgets. For example, a UI widget file is created in extended markup language (XML) format for the input UI application screen using the one or more UI widgets identified from each group box and the one or more UI widgets identified from each nested group box.

Further, the UI widget file created in the XML format is then converted into a JSON file in COCO format. A plurality of standard widget properties is added to the plurality of general UI widgets (also referred as standard UI widgets) in the JSON file, using a widget properties config file. The widget properties config file comprises of definitions of the plurality of general UI widgets. Similarly, a plurality of custom UI widget properties is added to the plurality of custom UI widgets in the JSON file, using a widget properties config file. The widget properties config file (tool) comprises of definitions of the plurality of UI custom widgets. Finally, the converted JSON file in COCO format is utilized for automatically generating the editable UI screen for the input UI application screen using the forward engineering (FE) approach. The forward engineering (FE) approach is a low code no code platform which enables application development in a model-driven approach.

The methods and systems of the present disclosure eliminate the need of frequent cropping and labeling of UI widgets manually for each input UI screen image. This process is required only once to create the training data received at step 302 for obtaining the trained object detection model. The trained object detection model of the present disclosure is obtained by training the neural network model such as CNNs with the custom UI widget dataset which includes both the standard UI widgets and the user defined UI widgets.

Thus, the methods and systems of the present disclosure accurately predict the bounding boxes present in the input UI screen images (wireframes) with high accuracy through the trained object detection model without any need for manual intervention. For identification of the widgets with high accuracy the model is trained on the custom dataset, which will have the widgets in the image like text boxes, dropdowns, text areas, radio button...etc. The trained object detection model intelligently determines the UI widgets even with variations from the trained data. In addition to determining the control type, the color and Cascading style sheets (CSS) is also detected by the trained object detection model. Further, the methods and systems of the present disclosure able to generate the editable UI screen for different UI application screen image type include but are not limited to web-based screen images, VB screen images, and Mainframe screen images.

### Example Scenario:

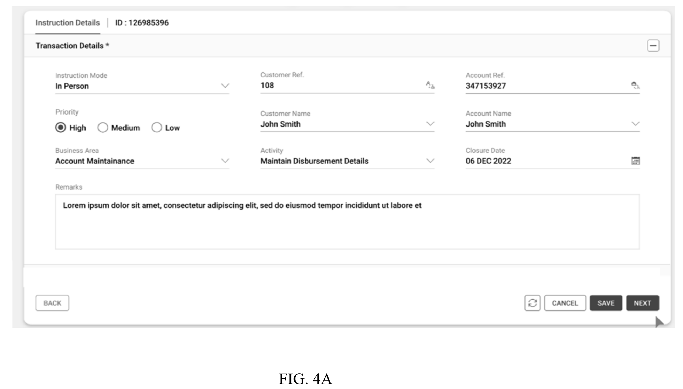

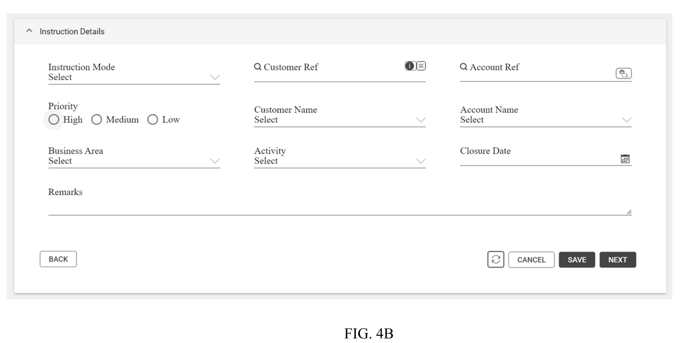

The methods and systems of the present disclosure were experimented with several input UI application screen images and respective generated editable UI screens, to test the conversion accuracy. FIGS. 4A and 4B show an exemplary input user interface (UI) application screen image and a respective generated editable UI screen, in accordance with some embodiments of the present disclosure. FIG. 4B shows the generated editable UI screen for the input UI application screen image shown in FIG. 4A, by the methods and systems of the present disclosure. As shown in FIGS. 4A and 4B, the generated editable UI screen is almost same as that of the respective input UI application screen image and thus the conversion accuracy is almost 100% with the test results.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of automatic generation of the editable user interface screen from the application screen image. The methods and systems of the present disclosure detect the user interface (UI) widgets present in the given UI screen image using deep learning technique and automatically generates an editable UI screen for the given UI screen image using the detected UI widgets.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), comprising:
receiving, via one or more input/output (I/O) interfaces, an input image of an input user interface (UI) application screen for which an editable UI screen is to be generated (202);
predicting, via one or more hardware processors, one or more bounding boxes and a bounding box class associated with each of the one or more bounding boxes, from the input image of the input UI application screen, using a trained object detection model (204);
identifying, via the one or more hardware processors, one or more group boxes from the one or more bounding boxes, based on the bounding box class associated with each of the one or more bounding boxes (206);
identifying, via the one or more hardware processors, one or more UI widgets in each group box of the one or more group boxes, using (i) the input image of the input UI application screen, (ii) the one or more bounding boxes and the bounding box class associated with each of the one or more bounding boxes (208);
identifying, via the one or more hardware processors, one or more nested group boxes present in each group box of the one or more group boxes based on presence of one or more expanding line widgets and one or more collapse line widgets in each group box (210);
identifying, via the one or more hardware processors, the one or more UI widgets by iteratively processing the one or more expanding line widgets and the one or more collapse line widgets associated with each nested group box of the one or more nested group boxes present in each group box (212); and
automatically generating, via the one or more hardware processors, the editable UI screen for the input UI application screen, from one or more of (i) the one or more UI widgets in each group box of the one or more group boxes, and (ii) the one or more UI widgets associated with each nested group box of the one or more nested group boxes present in each group box, using a forward engineering approach (214).

2. The processor-implemented method (200) as claimed in claim 1, wherein the trained object detection model is obtained by:
receiving (i) one or more UI widgets associated with each web screen image of a plurality of web screen images, and (ii) a plurality of UI widget labels (302);
annotating the one or more UI widgets associated with each web screen image of the plurality of web screen images with the plurality of UI widget labels, using a widget labeling technique, to obtain one or more annotated UI widgets associated with each web screen image of the plurality of web screen images (304); and
training a convolutional neural network (CNN) model with (i) the plurality of web screen images and (ii) the one or more annotated UI widgets associated with each web screen image, to obtain the trained object detection model (306).

3. The processor-implemented method (200) as claimed in claim 1, wherein the one or more UI widgets identified in each group box and the one or more UI widgets identified in each nested group box include one or more general UI widgets and one or more custom UI widgets.

4. A system (100), comprising:
a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:
receive via the one or more I/O interfaces (106), an input image of an input user interface (UI) application screen for which an editable UI screen is to be generated;
predict one or more bounding boxes and a bounding box class associated with each of the one or more bounding boxes, from the input image of the input UI application screen, using a trained object detection model;
identify one or more group boxes from the one or more bounding boxes, based on the bounding box class associated with each of the one or more bounding boxes;
identify one or more UI widgets in each group box of the one or more group boxes, using (i) the input image of the input UI application screen, (ii) the one or more bounding boxes and the bounding box class associated with each of the one or more bounding boxes;
identify one or more nested group boxes present in each group box of the one or more group boxes based on presence of one or more expanding line widgets and one or more collapse line widgets in each group box;
identify the one or more UI widgets by iteratively processing the one or more expanding line widgets and the one or more collapse line widgets associated with each nested group box of the one or more nested group boxes present in each group box; and
automatically generate the editable UI screen for the input UI application screen, from one or more of (i) the one or more UI widgets in each group box of the one or more group boxes, and (ii) the one or more UI widgets associated with each nested group box of the one or more nested group boxes present in each group box, using a forward engineering approach.

5. The system (100) as claimed in claim 4, wherein the one or more hardware processors (104) are configured to obtain the trained object detection model, by:
receiving (i) one or more UI widgets associated with each web screen image of a plurality of web screen images, and (ii) a plurality of UI widget labels;
annotating the one or more UI widgets associated with each web screen image of the plurality of web screen images with the plurality of UI widget labels, using a widget labeling technique, to obtain one or more annotated UI widgets associated with each web screen image of the plurality of web screen images; and
training a neural network model with (i) the plurality of web screen images and (ii) the one or more annotated UI widgets associated with each web screen image, to obtain the trained object detection model.

6. The system (100) as claimed in claim 4, wherein the one or more UI widgets identified in each group box and the one or more UI widgets identified in each nested group box include one or more general UI widgets and one or more custom UI widgets.

7. One or more non-transitory machine-readable information storage mediums comprising one or more instructions which when executed by one or more hardware processors cause:
receiving, via one or more input/output (I/O) interfaces, an input image of an input user interface (UI) application screen for which an editable UI screen is to be generated;
predicting, one or more bounding boxes and a bounding box class associated with each of the one or more bounding boxes, from the input image of the input UI application screen, using a trained object detection model;
identifying, one or more group boxes from the one or more bounding boxes, based on the bounding box class associated with each of the one or more bounding boxes;
identifying, one or more UI widgets in each group box of the one or more group boxes, using (i) the input image of the input UI application screen, (ii) the one or more bounding boxes and the bounding box class associated with each of the one or more bounding boxes;
identifying, one or more nested group boxes present in each group box of the one or more group boxes based on presence of one or more expanding line widgets and one or more collapse line widgets in each group box;
identifying, via the one or more hardware processors, the one or more UI widgets by iteratively processing the one or more expanding line widgets and the one or more collapse line widgets associated with each nested group box of the one or more nested group boxes present in each group box; and
automatically generating, via the one or more hardware processors, the editable UI screen for the input UI application screen, from one or more of (i) the one or more UI widgets in each group box of the one or more group boxes, and (ii) the one or more UI widgets associated with each nested group box of the one or more nested group boxes present in each group box, using a forward engineering approach.

8. The one or more non-transitory machine readable information storage mediums as claimed in claim 7, wherein the trained object detection model is obtained by:
receiving (i) one or more UI widgets associated with each web screen image of a plurality of web screen images, and (ii) a plurality of UI widget labels;
annotating the one or more UI widgets associated with each web screen image of the plurality of web screen images with the plurality of UI widget labels, using a widget labeling technique, to obtain one or more annotated UI widgets associated with each web screen image of the plurality of web screen images; and
training a convolutional neural network (CNN) model with (i) the plurality of web screen images and (ii) the one or more annotated UI widgets associated with each web screen image, to obtain the trained object detection model.

9. The one or more non-transitory machine readable information storage mediums as claimed in claim 7, wherein the one or more UI widgets identified in each group box and the one or more UI widgets identified in each nested group box include one or more general UI widgets and one or more custom UI widgets.
